# EUROPEAN PATENT SPECIFICATION

(11) **EP 2 472 158 B1**
(45) Date of publication and mention of the grant of the patent: **17.06.2015**
(21) Application number: 11009959.5
(22) Date of filing: 19.12.2011
(51) Int. Cl.: F16L 21/04, F16L 21/08

(54) **Flexible coupling with mechanical locking and non-slip device used in said coupling**
Flexible Kupplung mit mechanischer Verriegelung und Anti-Rutschvorrichtung für die Kupplung
Raccord flexible avec verrouillage mécanique et dispositif anti-dérapage utilisé dans ledit raccord

(30) Priority: 30.12.2010 IT VI20100355
(43) Date of publication of application: 04.07.2012
(73) Proprietor: S.a.pro. S.r.l., 36013 Piovene Rocchette (VI) (IT)
(72) Inventor: Celadon, Giampietro, 36030 Dueville (VI) (IT)
(74) Representative: Ziliotto, Tiziano

(56) References cited:
- WO-A1-2005/100839
- WO-A1-2008/010030
- GB-A- 2 346 422
- US-A- 4 867 488
- US-A- 4 878 698
- US-A- 5 297 826
- US-A- 5 803 513

## Description

### TECHNICAL FIELD OF THE INVENTION

The present invention concerns couplings for pressurized lines.

In particular, the present invention concerns flexible couplings with mechanical locking for metal pipes, preferably for fittings and pipes made of cast iron, particularly nodular cast iron.

The present invention also concerns a non-slip device used in said mechanically locking flexible couplings.

### DESCRIPTION OF THE STATE OF THE ART

In the field of hydraulics, thermal hydraulics and fluid transport in general, nodular cast iron pipes are used to carry out lines suitable for transporting and distributing water, gas and other pressurized liquid or gaseous fluids. Connection systems used for connecting pipes during laying and setting at work are also known.

Some of these connection systems use devices that are commonly called couplings.

Said couplings must comply with some essential requisites, in particular they must ensure perfect water-tightness over their entire operating life and must be resistant to the slipping action due to longitudinal stress present in the line.

A type of coupling that is widely used is the so-called mechanically-locking flexible coupling.

According to a known embodiment of this coupling, a suitable portion of a male end of a tubular element is inserted coaxially inside a female end of another tubular element to be connected to the first one.

The two elements generally consist of pipes, pipe fittings or adapters having various shapes.

The female end, called bell end or simply bell by the experts, has a flared shape, suited to house the male end and an annular flange.

The coupling also comprises an annular seal in elastomer, which sometimes is suited to be housed in a seat created in the inner wall of the bell, and an annular element provided with a counter flange and suited to be externally coupled to the male tubular element at the level of its end.

The counter flange is provided with through holes, each one of which is suitable for receiving a threaded end of a corresponding hook-shaped anchoring element suited to be engaged with the outer part of the bell.

To install the coupling it is necessary to couple the first pipe to the bell axially after positioning the seal and to arrange the anchoring elements so that they are engaged with the corresponding hole on one side and with the shaped edge of the external part of the bell on the other side.

Finally, the operator provides for applying the nuts to the threaded ends of the anchoring elements, properly tightening them, usually with a torque wrench.

In this way, the annular element and in particular its annular edge is fitted between the pipe and the bell, compressing and elastically deforming the seal so that it adheres to the walls of the corresponding seat in the bell, thus ensuring the water tightness of the coupling.

A drawback posed by this type of coupling is constituted by the fact that it does not guarantee resistance to longitudinal stress and therefore, in particular in the presence of high pressure, the male end of the pipe may slip off the bell.

As a consequence of the above, in individual points of the lines, like for example angular deviations, where said couplings are employed, anchoring blocks must be provided, made of concrete or another material capable of transferring the thrust force of the fluid to the surrounding ground.

This method, however, cannot be always applied, owing for example to the non optimal characteristics of the ground, to the limited space available, to the overall dimensions of the pipes, to the use of overground pipes, to the costs and the time required for installing said blocks.

The object of the present invention is to overcome all the drawbacks described above.

In particular, it is an object of the present invention to carry out a non-slip connection device, in particular a mechanically-locking flexible coupling, for high-pressure lines carried out using cast iron pipes, particularly nodular cast iron pipes.

It is another object of the invention to carry out a connection device that can be applied during installation of pressurized fluid transport systems.

It is another object of the invention to carry out a connection device capable of ensuring perfect resistance to longitudinal thrust forces.

It is another object of the invention to carry out a connection device that is perfectly watertight.

It is another, yet not the least object of the invention to carry out a connection device that is easy to use and to assemble and suitable for mass production. Further examples of connection devices according to the prior art are known from each of documents US 4878698 A, US 5803513 A, US 5,297,826 A and US 4867488 A.

### SUMMARY OF THE PRESENT INVENTION

The present invention is based on the general consideration that it is desirable to carry out a connection device provided with a gripping element capable of granting non-slip characteristics to the same device.

According to a first embodiment, the object of the present invention is a connection device according to claim 1.

The solution proposed advantageously makes it possible to carry out a simple connection device comprising a reduced number of components.

The first thrust means are preferably operated by the fixing means.

More preferably, the first thrust means comprise mutual contact surfaces of the connection element and the gripping element.

In said preferred solution, the mutual contact surfaces are inclined with respect to the development axis of the connection element.

Preferably, the gripping element is radially deformable.

According to an embodiment of the invention, the gripping element comprises two or more sectors of a circle.

The gripping element preferably comprises at least two elements suited to be arranged side by side in order to occupy at least partially the external surface of the second tubular element.

The gripping element more preferably comprises at least two elements suited to be arranged side by side in order to essentially occupy the entire external surface of the second tubular element.

According to another embodiment of the invention, the gripping element comprises an open annular element.

According to the invention, the connection device comprises a water sealing element suited to be interposed between the connection element and the first tubular element.

The water sealing element preferably comprises a seal.

Still according to the invention, the connection device comprises second means suited to thrust the water sealing element against the first tubular element.

According to the invention, the connection device comprises an auxiliary element suited to be interposed between the connection element and the first tubular element in order to obtain said second thrust means.

The second thrust means comprise adjusting means suited to allow the adjustment of the thrust force of the water sealing element against the first tubular element. In a preferred embodiment of the invention, the adjusting means act on the auxiliary element.

Advantageously, the adjusting means comprise screws.

The fixing means of the element for connection to the first tubular element preferably comprise projecting seats provided with through holes suited to accommodate connection members preferably comprising an anchoring screw with a corresponding nut.

More preferably, the screw comprises a shaped head suited to be engaged with a portion of the first tubular element

According to a preferred embodiment of the invention, the gripping means comprise one or more tooth/teeth.

Preferably, the gripping element is made of hardened and/or nitrided steel.

The connection element is preferably made of cast iron.

Preferably, the first tubular element comprises a tubular portion having its female end in the shape of a bell, in proximity to which there is an annular edge or flange.

The device of the invention is preferably a mechanically-locking flexible coupling.

The proposed solution makes it possible to advantageously carry out a connection device that can be rapidly applied. Still advantageously, the proposed solution makes it possible to carry out a device whose installation does not require the presence of specialized personnel and/or the use of special equipment.

Still advantageously, the proposed solution makes it possible to carry out a device that can be easily removed for replacement following damage and/or wear.

### BRIEF DESCRIPTION OF THE DRAWINGS

Further advantages, objects and characteristics, as well as further embodiments of the present invention are defined in the claims and will be illustrated in the following description, with reference to the enclosed drawings; in the drawings, corresponding or equivalent characteristics and/or components are identified by the same reference numbers. In particular:
- Figure 1 shows a perspective view of a coupling associated with the ends of two tubular elements to be connected according to a first embodiment not forming part of the invention;

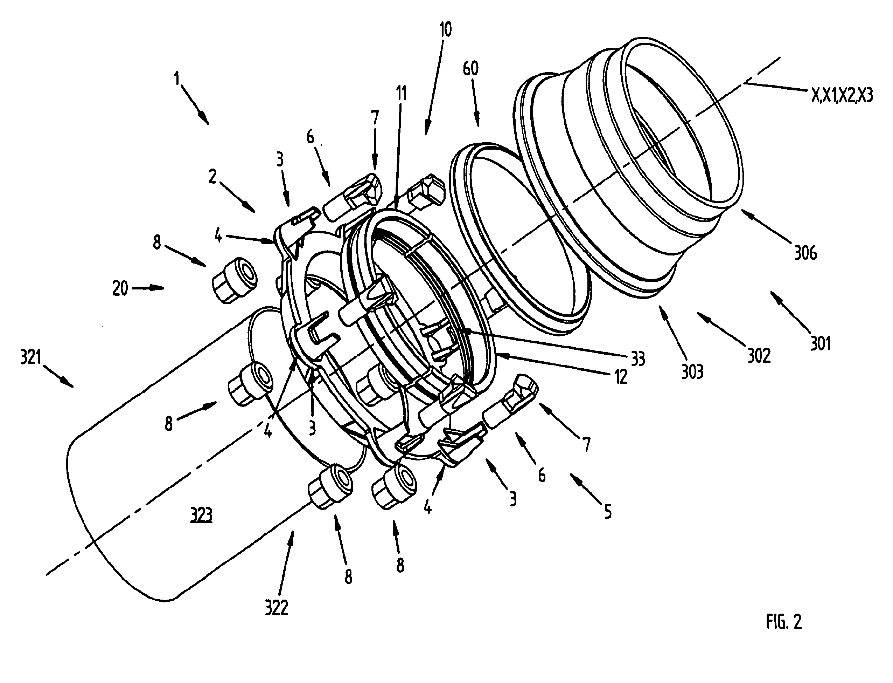

- Figure 2 shows an exploded view of Figure 1;
- Figure 3 shows a longitudinal cross section of Figure 1;
- Figure 3a shows an enlarged detail of Figure 3;
- Figure 4 shows a plan view of an element of the coupling shown in Figure 2;
- Figure 5 shows a sectional view of Figure 4 along line V-V;
- Figure 6 shows a variant embodiment of Figure 3;
- Figure 7 shows a plan view of an element of the coupling shown in Figure 6;
- Figure 8 shows a sectional view of Figure 7 along line VIII-VIII;
- Figure 9 shows a plan view of another element of the coupling shown in Figure 6;
- Figure 10 shows a sectional view of Figure 9 along line X-X;
- Figure 11 shows another variant embodiment of Figure 3;
- Figure 12 shows a perspective view of a coupling associated with the ends of two tubular elements to be connected according to the invention;

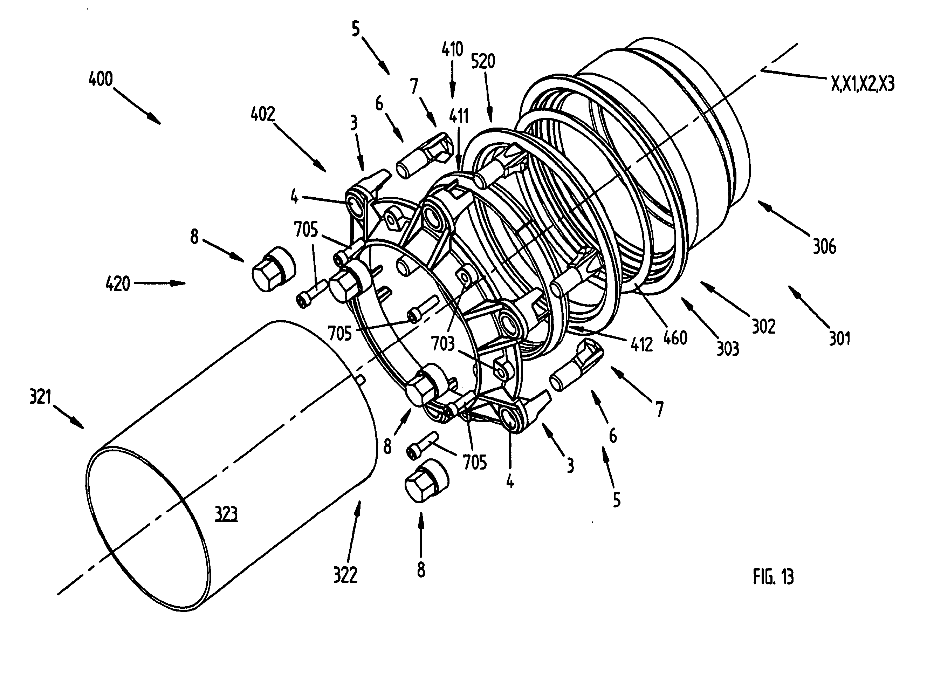

- Figure 13 shows an exploded view of Figure 12;

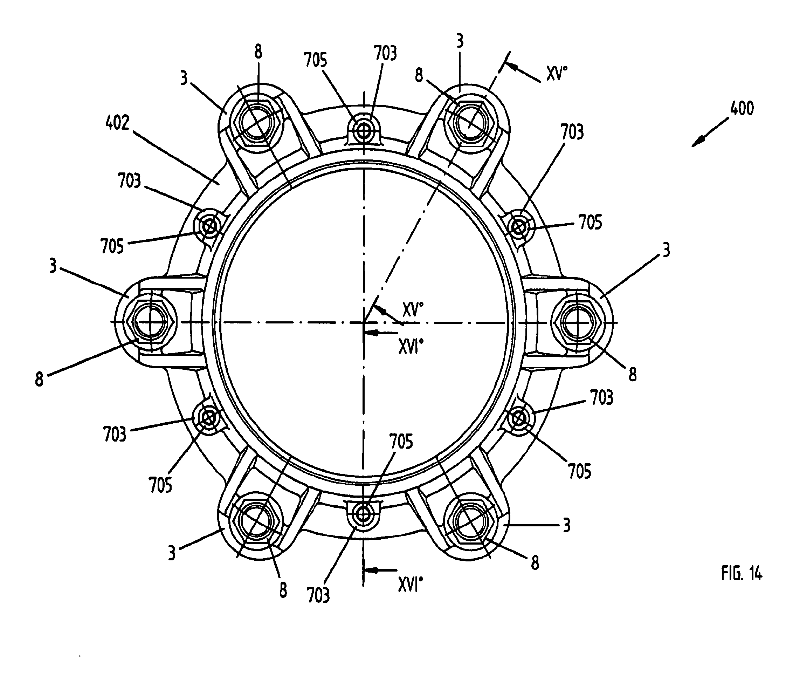

- Figure 14 shows a plan view of Figure 12;
- Figure 15 shows a sectional view of Figure 14 along line XV-XV;

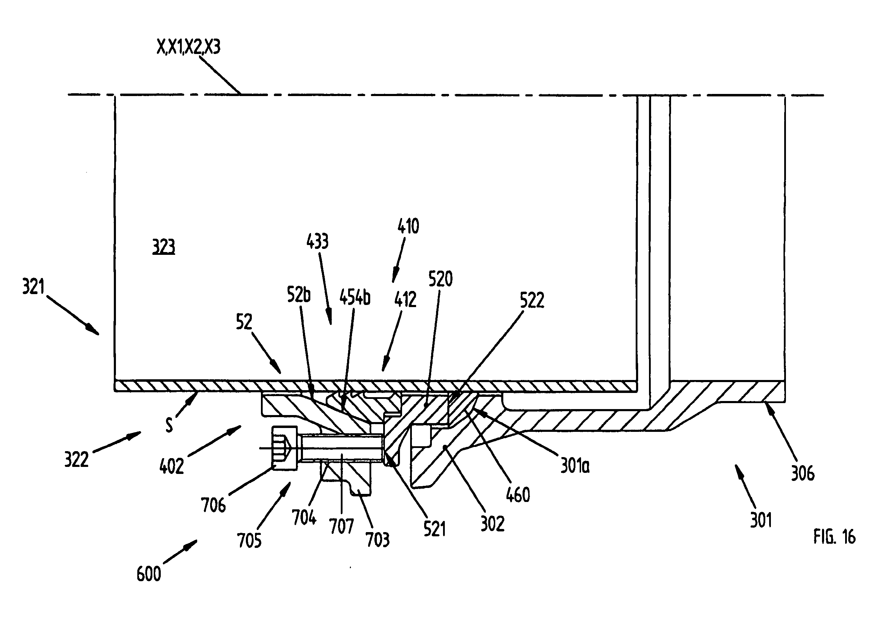

- Figure 16 shows a sectional view of Figure 14 along line XVI-XVI.

### DETAILED DESCRIPTION OF THE PRESENT INVENTION

The connection device that is the subject of the invention, hereinafter referred to simply as "coupling" for the sake of simplicity, can be applied to hydraulic lines and in particular to pressurized lines comprising pipes in cast iron, more particularly in nodular cast iron.

It is clear that the same coupling can also be applied to pressurized lines comprising pipes and ducts made of other preferably metallic materials, and even having different shapes.

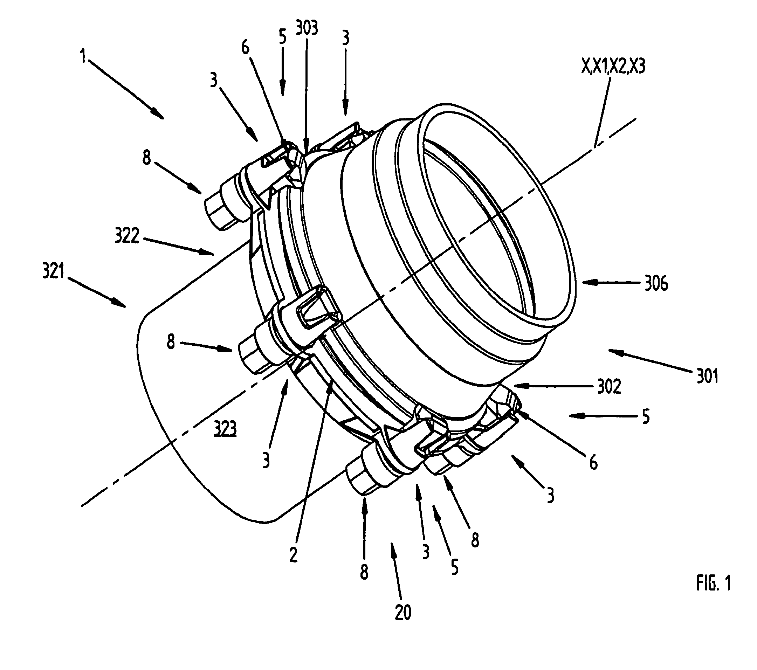

A non-limiting example of embodiment of a coupling not forming part of the present invention is represented in Figure 1, where it is indicated as a whole by 1.

Said coupling 1 preferably comprises a flexible coupling, more particularly a mechanically-locking flexible coupling.

Figure 1 shows the coupling 1 assembled and applied between the two facing ends 302, 322 respectively of a first tubular element 301 and a second tubular element 321.

The end 302 of the first tubular element 301, of the female type, is in the shape of a bell and is suited to coaxially house at least one portion of the end 322 of the second tubular element 321, of the male type, essentially constituted by a pipe 323 in the non-limiting example.

More particularly, the first tubular element 301 comprises a section of a line 306, in the example consisting of a fitting, that has a preferably annular edge 303 or a flange on the outside, in the vicinity of the bell-shaped end 302.

It is clear that in general the tubular elements 301 and 321 may comprise two pipes and/or lines and/or pipe fittings and/or adapters having various shapes and characteristics and/or combinations thereof.

The coupling 1 comprises a first element, or connection element 2, essentially in the shape of an annular truncated cone, a second element, or gripping element 10, interposed between the connection element 2 and the first tubular element 301, and a sealing element 60 that is interposed, too, between the connection element 2 and the first tubular element 301.

The connection element 2, essentially in the shape of an annular truncated cone, is externally coupled to the second tubular element 321 at the level of its end 322 and can be connected to the first tubular element 301 via fixing means 20.

For this purpose, the connection element 2 is circumferentially provided with a plurality of projecting seats 3 in the shape of tabs spaced according to equal angles, in the number of six in the embodiment illustrated herein, provided with through holes 4, each one of which is suited to accommodate a corresponding anchoring element 5 comprising a screw 6 having a hook-shaped head 7 suited to be engaged with the edge 303 of the first tubular element 301 and a corresponding nut 8.

Fixing the connection element 2 to the first tubular element 301 by screwing the nuts 8 makes it approach essentially along the longitudinal direction X corresponding to the development axes X1 and X2 of the first tubular element 301 and of the second tubular element 321 that essentially coincide with each other in the configuration with the coupling 1 assembled.

According to variant embodiments of the invention, the number and arrangement of the projecting seats 3 along the circumference of the connection element 2 may be different from what is shown in Figure 1 and said number and arrangement may be determined, for example, by the type of fluid transported and by the operating pressure of the same.

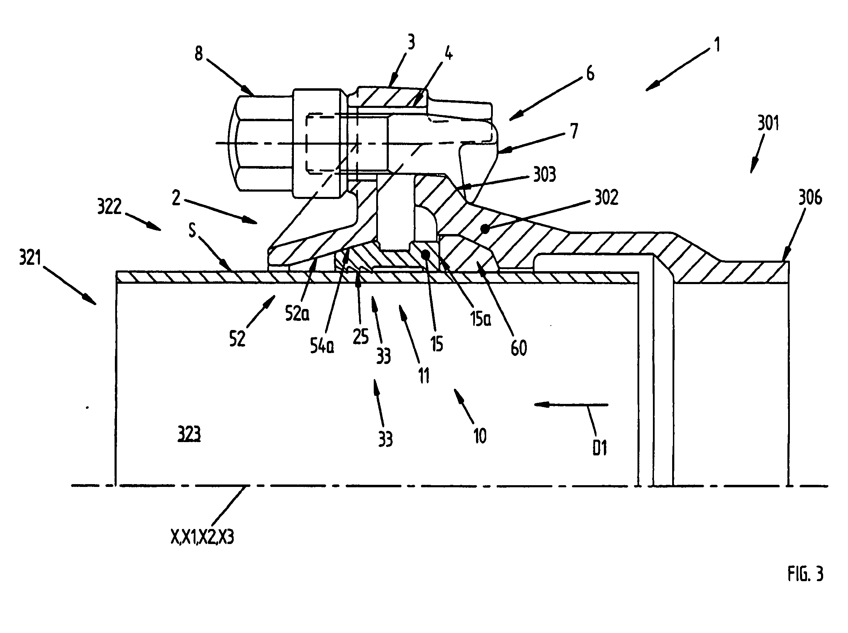

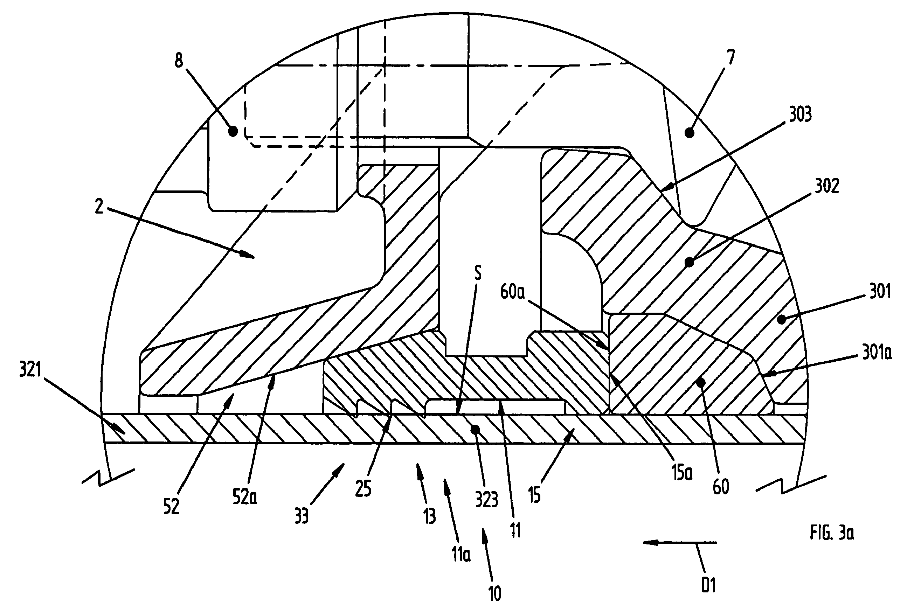

A portion of the internal surface 52 of the connection element 2 is in the shape of a truncated cone, so as to define a contact surface 52a that is oblique with respect to the development axis X3 of the connection element 2 itself, better visible in the cross section of Figure 3, also coinciding with axes X, X1 and X2.

The gripping element 10 that serves as a non-slip device, as is better explained below, is interposed between the connection element 2 and the end 302 of the first tubular element 301.

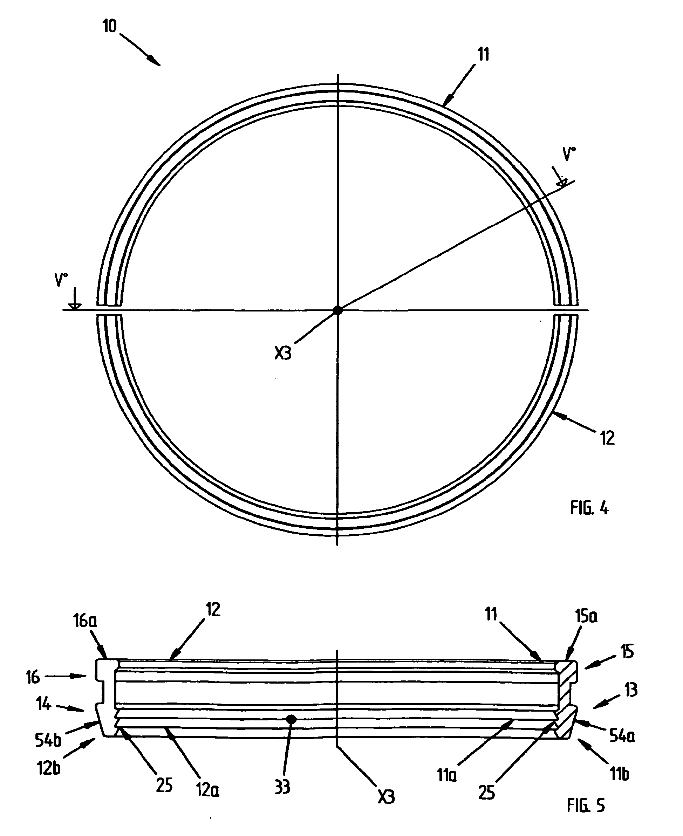

The gripping element 10 as a whole is essentially circular in shape and comprises two separate semi circular sectors 11 and 12, better visible in Figure 4 and suited to make the gripping element 10 radially deformable as a whole. On the inner surface 11a and 12a of a first end axial portion 13, 14 of each semi circular sector 11 and 12, as shown in Figure 5, there are gripping means 33 suited to be arranged in contact with the external surface S of the pipe 323 that makes up the end 322 of the second tubular element 321.

The gripping means 33 are suited to come into contact with and penetrate the external surface S of the pipe 323, in such a way as to make the gripping element 10 integral with the pipe 323 and thus with the second tubular element 321.

Said gripping means 33 comprise, in the preferred non-limiting embodiment illustrated herein, three teeth 25 obtained circumferentially on said inner surface 11a and 12a of each semi circular sector 11 and 12 and produce a so-called saw tooth configuration for each inner surface 11a and 12a.

In construction variants of the invention, the number of teeth may be different, as well as their shape and/or height, depending on the type of material used for the semi circular sectors 11, 12 and/or for the pipe 323.

In further construction variants, the teeth may belong to an insert housed in a suitable seat obtained in each sector 11 and 12. This solution advantageously allows the sectors and the teeth to be made also using different materials, having characteristics that are more suitable for the functions performed. More particularly, according to a preferred embodiment of the invention each sector is made of cast iron and each insert is preferably made of hardened and/or nitrided steel.

Furthermore, in other variant embodiments, the teeth may be present only on some sectors of the entire circumference, without affecting the desired gripping function.

The external surface 11b and 12b of the end axial portion 13, 14 of each semi circular sector 11 and 12 is in the shape of a truncated cone, so as to define corresponding contact surfaces 54a, 54b that are oblique with respect to the development axis X3 of the gripping element 10, coinciding with the above mentioned axes X, X1 and X2 in the configuration with the coupling 1 assembled.

The oblique contact surfaces 54a, 54b of each semi circular sector 11 and 12 are arranged against the oblique contact surface 52a of the connection element 2.

The above mentioned oblique contact surfaces 54a, 54b of the semi circular sectors 11 and 12 and the oblique contact surface 52a of the connection element 2 create adjustable thrust means suited to force the gripping means 33 against the surface S of the pipe 323 so as to activate them and make the gripping element 10 integral with the second tubular element 321.

In fact, acting on each nut 8 to fix the connection element 2 to the first tubular element 301 at the same time thrusts each semi circular sector 11 and 12 against the surface S of the pipe 323, so as to activate, in fact, said gripping means 33. A second end axial portion 15, 16 of each semi circular sector 11 and 12 presents, furthermore, a contact surface 15a, 16a suited to come to bear against the lateral annular surface 60a of the sealing element 60 of the coupling 1.

The sealing element 60 comprises an annular seal preferably made of elastomer, suited to be externally coupled to the pipe 323, preferably in the vicinity of its end 322.

The inner wall of the bell-shaped portion 302 of the first tubular element 301 is provided with an annular seat 301a suited to accommodate the seal 60.

In the non-limiting embodiment illustrated herein, the second end axial portions 15, 16 and the corresponding contact surfaces 15a, 16a make up the thrust element suited to cooperate with the seal 60 and to provide water tightness for the coupling 1.

In fact, acting on each nut 8 to fix the connection element 2 to the first tubular element 301 at the same time moves the semi circular sectors 11 and 12 and their second end axial portions 15, 16 in the axial direction X towards the first tubular element 301 and therefore ensures the desired thrusting action on the seal 60 to obtain said water tightness.

According to the installation procedure established for the coupling 1, the operator places the connection element 2 and the seal 60 on the pipe 323. Successively the two semi circular sectors 11 and 12 are applied between the connection element 2 and the seal 60.

Then the operator applies the anchoring elements 5, fitting the hook-shaped head 7 of the screw 6 into the edge 303 of the first tubular element 301 and screwing to tighten it on the nuts 8.

During this operation, the connection element 2 is pulled towards the first tubular element 301 and at the same time each semi circular sector 11 and 12 is pushed against the surface S of the pipe 323 owing to the thrust resulting from the sliding movement of the oblique contact surface 52a of the connection element and the oblique contact surfaces 54a, 54b of the semi circular sectors 11 and 12, as explained above.

As a consequence of the above, the semi circular sectors 11 and 12 that make up the gripping element 10 are pushed radially towards the inside and the gripping means 33 interfere with the external surface S of the pipe 323 penetrating it and making the semi circular sectors 11, 12 integral with the pipe 323, so as to lock them onto it.

At the same time, the second end axial portions 15, 16 and the corresponding contact surfaces 15a, 16a of the two semi circular sectors 11,12 push on the seal 60 to provide water tightness for the coupling 1.

Once the nuts 8 have been fixed, the assembly operations of the coupling 1 can be considered completed.

It is worth noting that all the nut tightening operations can advantageously be carried out with the aid of torque wrenches that ensure control of the forces acting on the various mechanical members.

The particular truncated cone shape of the semi circular sectors 11, 12 advantageously gives stability to the coupling 1 once it has been installed and has the pressurized fluid flowing inside it.

In fact, the passage of the fluid inside the tubular elements 301, 321 and the coupling 1 takes place along the direction D1 shown in the figure. Said trend determines a thrust component along said direction D1 of the second tubular element 321 with respect to the first tubular element 301 that in turn tends to push the circular sectors 11, 12 along the same direction D1, the teeth 25 meshing with the external surface S of the pipe 323. Said thrust in turn makes the semi circular elements 11, 12 push with their oblique surfaces 54a, 54b against the oblique surface 52a of the connection element 2. The semi circular elements 11, 12 thus fit between the connection element 2 and the pipe 323, increasing adhesion to the pipe 323 and therefore increasing the non-slip effect on the coupling 1.

The above clearly shows that the gripping element 10, made up of the semi circular sectors 11 and 12, enhances both mechanical resistance, thanks to its ability to be radially deformed and to the presence of the gripping means, and water tightness, thanks to the presence of the thrust surfaces acting on the seal. A variant embodiment of the coupling that is not part of the invention is illustrated with reference to Figures from 6 to 10.

Said embodiment differs from the embodiment previously described in that it does not comprise a single element to enhance both mechanical resistance and water tightness, in particular the gripping element, while these two functions are performed by two different elements.

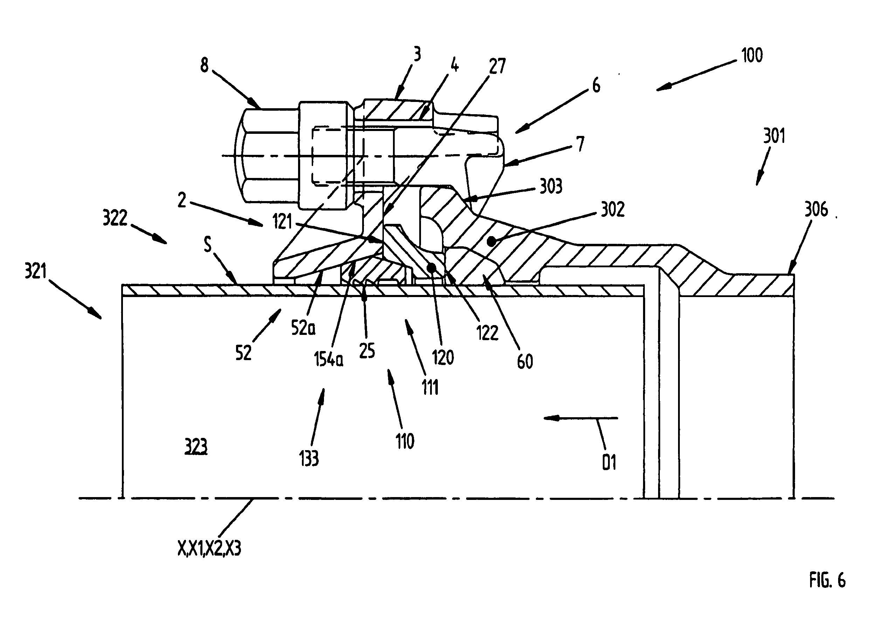

As shown in Figure 6, in fact, the coupling 100 comprises a connection element 2, a gripping element 110, interposed between the connection element 2 and the first tubular element 301, an auxiliary thrust element 120, essentially in the shape of an annular truncated cone, and a sealing element 60.

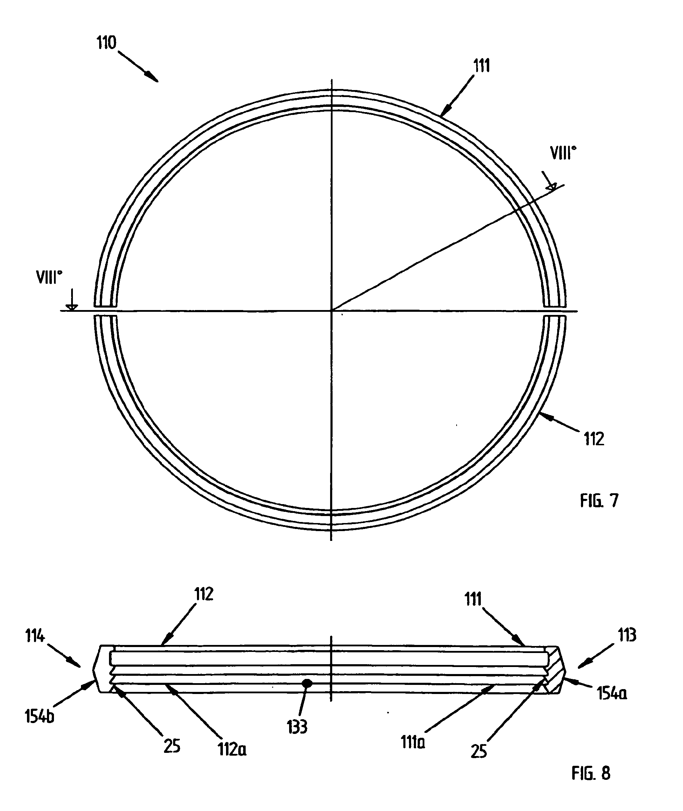

The gripping element 110, which serves as a non-slip device, as a whole is essentially in the shape of a circular truncated cone and is constituted by two separate semi circular sectors 111 and 112 suited to make the gripping element 110 radially deformable as a whole, as shown in Figure 7. On the inner surface 111a and 112a of a first end axial portion 113, 114 of each semi circular sector 111 and 112 there are gripping means 133 suited to be arranged in contact with the external surface S of the pipe 323, analogously to what has been described with reference to the first embodiment.

Then there are also corresponding contact surfaces 154a, 154b that are oblique with respect to the development axis X3 of the gripping element 110.

The oblique contact surfaces 154a, 154b of each semi circular sector 111 and 112 are arranged against the oblique contact surface 52a of the connection element 2. The gripping element 110 described herein thus performs the same non-slip function as the gripping element 10 described with reference to the first embodiment of the invention.

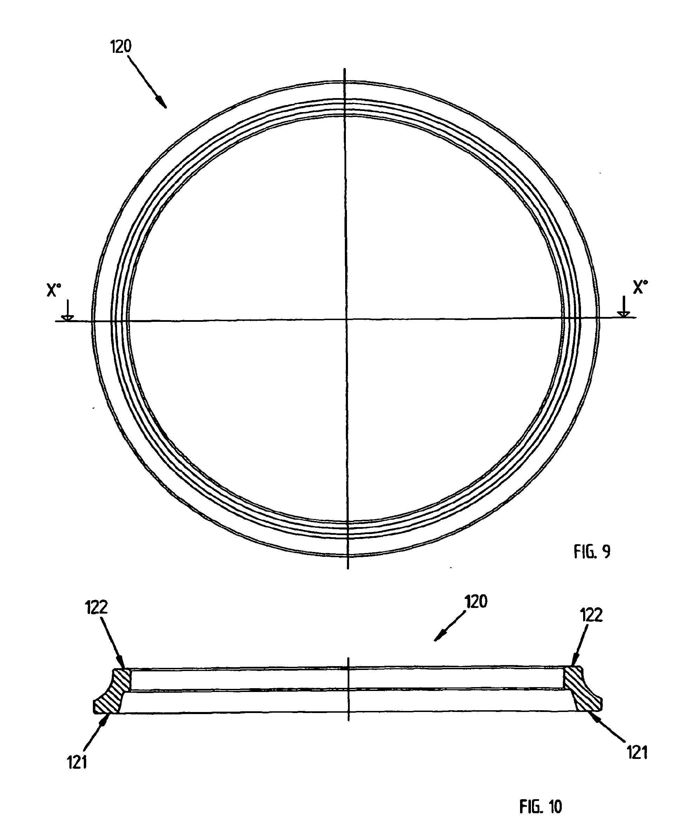

The water sealing function, meaning the thrust action on the seal 60, is performed, instead, in the present embodiment, by the auxiliary thrust element 120 shown in Figures 9 and 10.

The auxiliary thrust element 120 is in the shape of an annular truncated cone and has a first lateral annular face 121 suited to be arranged in contact with a lateral surface 27 of the connection element 2 and a second lateral annular face 122, opposing the first one, suited to be arranged in contact with the seal 60.

As already explained, the auxiliary element 120 is thus the thrust element suited to cooperate with the seal 60 and achieve water tightness for the coupling 100.

In fact, acting on each nut 8 to fix the connection element 2 to the first tubular element 301 at the same time moves the auxiliary thrust element 120 in the axial direction X towards the first tubular element 301 and therefore ensures the desired thrusting action on the seal 60 to obtain said water tightness.

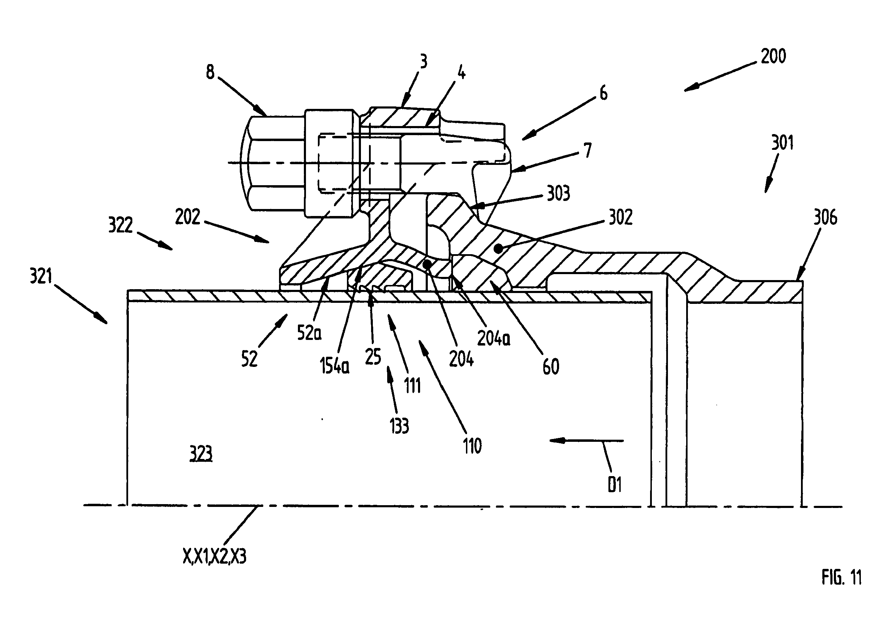

Another variant embodiment of the coupling that is not part of the invention is described with reference to Figure 11.

Said embodiment differs from the one previously described with reference to Figures from 6 to 10 in that it does not comprise a separate auxiliary thrust element that contributes to achieving water tightness and this function is performed by the connection element itself.

As shown in the figure, in fact, the coupling 200 comprises a connection element 202, a gripping element 110, interposed between the connection element 2 and the first tubular element 301, essentially in the shape of an annular truncated cone, and a sealing element 60.

The connection element 202 in this embodiment has a projecting annular edge 204 whose end lateral surface 204a is suited to be placed in contact with the seal 60.

It is the connection element 202 that thus constitutes the thrust element suited to cooperate with the seal 60 and to achieve water tightness for the coupling 200.

In fact, acting on each nut 8 to fix the connection element 202 to the first tubular element 301 at the same time moves the projecting edge 204 in the axial direction X towards the first tubular element 301 and therefore its lateral surface 204a thrusts the seal 60 as desired to ensure the desired water tightness.

The gripping element 110, of the same type previously described, acts instead as a non-slip device.

An embodiment of the coupling 400 that is the subject of the invention is illustrated with reference to Figures from 12 to 15.

Also in this embodiment mechanical resistance and water tightness are ensured by two different elements.

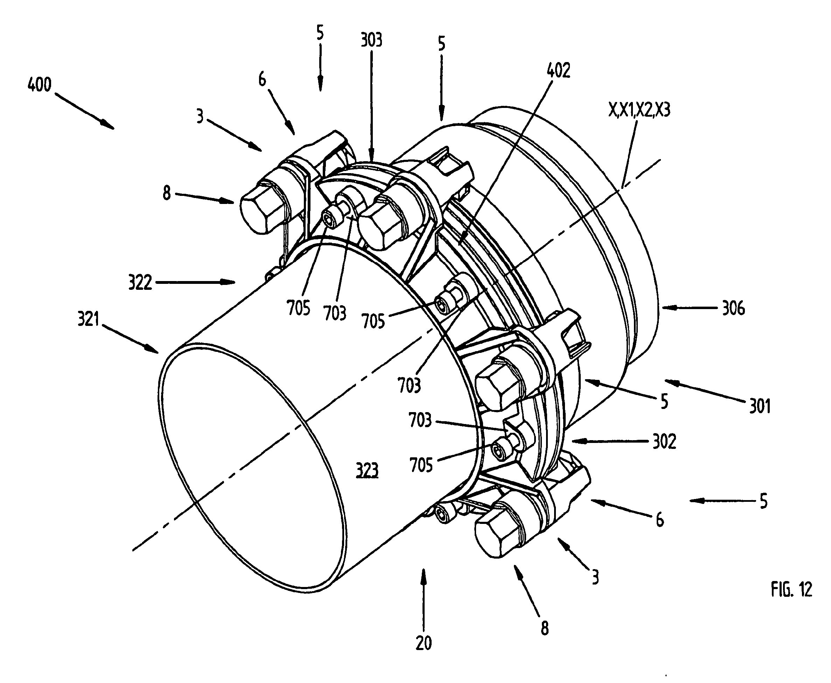

Figure 12 shows the coupling 400 assembled and applied between the two facing ends 302, 322 of a first tubular element 301 and a second tubular element 321 of the type described above.

The end 302 of the first tubular element 301, of the female type, is in the shape of a bell and is suited to coaxially house at least one portion of the end 322 of the second tubular element 321, of the male type, essentially constituted by a pipe 323 in the non-limiting example.

More particularly, the first tubular element 301 comprises a section of a line 306, in the example consisting of a fitting, that has a preferably annular edge 303 or a flange on the outside, in the vicinity of the bell-shaped end 302.

It is clear that in general the tubular elements 301 and 321 may comprise two pipes and/or lines and/or pipe fittings and/or adapters having various shapes and characteristics and/or combinations thereof.

The coupling 400 comprises a connection element 402, a gripping element 410, interposed between the connection element 402 and the first tubular element 301, an auxiliary thrust element 520, essentially in the shape of an annular truncated cone, and a sealing element 460.

The gripping element 410, which serves as a non-slip device, is essentially in the shape of a circular truncated cone and is constituted by two separate semi circular sectors 411 and 412 suited to make the gripping element 410 radially deformable as a whole. On the inner surface of a first end axial portion of each semi circular sector 411 and 412 there are gripping means 433 suited to be arranged in contact with the external surface S of the pipe 323.

The connection element 402, essentially in the shape of an annular truncated cone, is externally coupled to the second tubular element 321 at the level of its end 322 and can be connected to the first tubular element 301 via fixing means 420.

For this purpose, the connection element 402 is circumferentially provided with a plurality of projecting seats 3 in the shape of tabs spaced according to equal angles, in the number of six in the embodiment illustrated herein, provided with through holes 4, each one of which is suited to accommodate a corresponding anchoring element 5 comprising a screw 6 having a hook-shaped head 7 suited to be engaged with the edge 303 of the first tubular element 301 and a corresponding nut 8.

Fixing the connection element 2 to the first tubular element 301 by screwing the nuts 8 makes it approach essentially along the longitudinal direction X corresponding to the development axes X1 and X2 of the first tubular element 301 and of the second tubular element 321 that essentially coincide with each other in the configuration with the coupling 400 assembled.

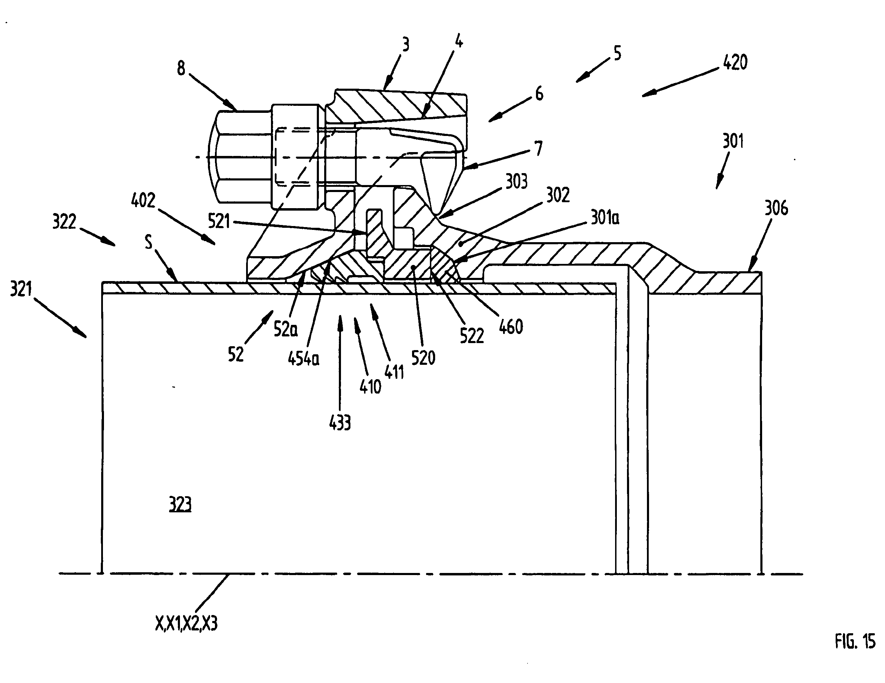

A portion of the internal surface 52 of the connection element 402 is in the shape of a truncated cone, so as to define a contact surface 52a that is oblique with respect to the development axis X3 of the connection element 2 itself, better visible in the cross section of Figure 15, also coinciding with axes X, X1 and X2. The gripping element 410 that serves as a non-slip device is interposed between the connection element 402 and the end 302 of the first tubular element 301. The gripping means 433 are suited to come into contact with and penetrate the external surface S of the pipe 323, in such a way as to make the gripping element 410 integral with the pipe 323 and thus with the second tubular element 321. The external surface of the end axial portion of each semi circular sector 411 and 412 is in the shape of a truncated cone, so as to define corresponding contact surfaces 454a, 454b that are oblique with respect to the development axis X3 of the gripping element 410, coinciding with the above mentioned axes X, X1 and X2 in the configuration with the coupling 1 assembled.

The above mentioned oblique contact surfaces 454a, 454b of the semi circular sectors 411 and 412 and the oblique contact surface 52a of the connection element 402 provide adjustable thrust means suited to force the gripping means 433 against the surface S of the pipe 323 so as to activate them and make the gripping element 410 integral with the second tubular element 321.

In fact, acting on each nut 8 to fix the connection element 2 to the first tubular element 301 at the same time thrusts each semi circular sector 411 and 412 against the surface S of the pipe 323, so as to activate, in fact, said gripping means 433.

The sealing element 460 comprises an annular seal preferably made of elastomer, suited to be externally coupled to the pipe 323, preferably in the vicinity of its end 322.

The inner wall of the bell-shaped portion 302 of the first tubular element 301 is provided with an annular seat 301a suited to accommodate the seal 460.

The water sealing function and thus the thrust action on the seal 460 is guaranteed, in the present embodiment, by the cooperation between the auxiliary thrust element 520 and suitable adjustable thrust means 600.

The auxiliary thrust element 520 is in the shape of an annular truncated cone and has a first lateral annular face 521 suited to cooperate with said adjustable thrust means 600 and a second lateral annular face 522, opposing the first one, suited to be arranged in contact with the seal 460.

The adjustable thrust means 600 comprise a plurality of projecting seats 703 of the connection element 402 that are spaced according to equal angles, in the number of six in the embodiment illustrated herein, provided with threaded through holes 704, each suited to accommodate a corresponding adjusting element 705 that is screwed therein. Each adjusting element 705 preferably comprises a screw having its operating head 706 easily activated by means of a tool, for example a setscrew wrench, and its stem 707 ending so that it rests on the first lateral annular face 521 of the auxiliary thrust element 520.

Fixing of the connection element 402 to the first tubular element 301 and mechanical resistance are achieved by screwing the nuts 8, as previously described.

The desired thrust on the seal 460 to provide water tightness is obtained, instead, by properly screwing the adjusting screws 705 that thrust the auxiliary thrust element 520 so that this in turn thrusts the seal 460 to provide water tightness for the coupling 400. Advantageously, in this embodiment of the invention the thrusting action on the seal 460 is maintained in an optimal way, independently of any movements of the other parts of the coupling 400, for example when during operation said parts are subjected to longitudinal forces due to high pressures. For example, a possible movement of the gripping element from its seat does not affect the water tightness of the sealing element 460, as the thrust force is independent of the gripping element. Furthermore, the presence of the adjusting screws 705 makes it possible to intervene at any moment to adjust the thrust force on the sealing element 460 should its intensity decrease over time, for example following deformations due to temperature changes or to any other reason.

Even though the invention has been described with reference to the enclosed drawings, upon implementation certain modifications may be made, which are all included in the inventive concept expressed in the following claims and are therefore protected by the present patent.

In variant embodiments of the invention, for example, the shape of the tubular elements and of the elements that make up the coupling may not be circular, and analogously the number of sectors making up the gripping element or the auxiliary thrust element may be higher than two.

Alternatively, the gripping element may be constituted by a single open annular element, instead of by several sectors, said gripping element being in any case radially deformable and thus suited to be engaged with the external surface of the tubular element.

It should also be underlined that all the parts can be replaced with other technically equivalent parts, that any material can be used, provided that it is compatible with the intended use, and that the various elements can have any size, depending on the needs.

It has thus been shown that the present invention allows all the set objects to be achieved. In particular, it makes it possible to obtain a connection device with non-slip properties for lines in high pressure systems and suited to be easily applied during installation of said systems.

While the present invention has been described with reference to the particular embodiments shown in the figures, it should be noted that the present invention is not limited to the specific embodiments illustrated and described herein; on the contrary, further variants of the embodiments described herein fall within the scope of the present invention, which is defined in the claims.

## Claims

1. Connection device (400) for joining a first tubular element (301) to a second tubular element (321), comprising at least one connection element (402) provided with fixing means (420) for connection to said first tubular element (301), said device further comprising a gripping element ( 410) that is interposed between said connection element ( 402) and said first tubular element (301) and is provided with gripping means (433) suited to be arranged in contact with at least one portion of the external surface (S) of said second tubular element (321), said connection device (400) comprising first thrust means suited to force said gripping means (433) of said gripping element (410) against said external surface (S) in order to make said gripping element (410) integral with said second tubular element (321) and guarantee mechanical resistance; a water sealing element (460) interposed between said connection element (402) and said first tubular element (301); second thrust means (520, 600) suited to thrust said water sealing element (60; 460) against said first tubular element (301); **characterized in that** said second thrust means comprise an auxiliary element (520) that is interposed between said connection element ( 402) and said first tubular element (301), said second thrust means further comprise adjustable thrust means (600); said auxiliary thrust element (520) cooperating with said adjustable thrust means (600) so as to guarantee the thrust action on said sealing element (460).

2. Device according to claim 1, **characterized in that** said auxiliary thrust element (520) is in the shape of an annular truncated cone and has a first lateral annular face (521) suited to cooperate with said adjustable thrust means (600) and a second lateral annular face (522), opposing the first one, suited to be arranged in contact with the seal (460).

3. Device according to any of the previous claims, **characterized in that** said adjustable thrust means (600) comprise a plurality of projecting seats (703) of said connection element (402) provided with threaded through holes (704), each suited to accommodate a corresponding adjusting element (705) that is screwed therein.

4. Device (400) according to any of the previous claims, **characterized in that** said first thrust means are operated by said fixing means (420).

5. Device (400) according to any of the preceding claims, **characterized in that** said first thrust means comprise mutual contact surfaces (454a; 454b) of said connection element ( 402) and said gripping element (410).

6. Device (400) according to claim 5, **characterized in that** said mutual contact surfaces (454a; 454b) are inclined with respect to the development axis (X3) of said connection element ( 402).

7. Device (400) according to any of the preceding claims, **characterized in that** said gripping element (410) is radially deformable.

8. Device (400) according to any of the preceding claims, **characterized in that** said gripping element (410) comprises at least two elements (411, 412) suited to be arranged side by side in order to occupy at least partially said external surface (S) of said second tubular element (321).

9. Device (400) according to any of the preceding claims, **characterized in that** it is a mechanically-locking flexible coupling.

## Patentansprüche

1. Verbindungsvorrichtung (400) zur Verbindung eines ersten, röhrenförmigen Elements (301) mit einem zweiten, röhrenförmigen Element (321), wenigstens ein Verbindungselement (402) umfassend, das mit Befestigungsmitteln (420) zur Verbindung mit dem besagten ersten röhrenförmigen Element (301) versehen ist, wobei die besagte Vorrichtung des Weiteren ein Greifelement (410) umfasst, das zwischen dem besagten Verbindungselement (402) und dem besagten ersten, röhrenförmigen Element (301) eingefügt und mit Greifmitteln (433) versehen ist, die geeignet sind, in Kontakt mit wenigstens einem Abschnitt der Außenfläche (S) des besagten zweiten, röhrenförmigen Elements (321) angeordnet zu werden, wobei die besagte Verbindungsvorrichtung (400) erste Druckmittel umfasst, die geeignet sind, die besagten Greifmittel (433) des besagten Greifelements (410) gegen die besagte Außenfläche (S) zu forcieren, um das besagte Greifelement (410) zu einer Einheit mit dem besagten zweiten, röhrenförmigen Element (321) werden zu lassen und mechanische Beständigkeit zu gewährleisten; ein zwischen dem besagten Verbindungselement (402) und dem besagten ersten röhrenförmigen Element (301) eingefügtes, wasserabdichtendes Element (460); zweite Druckmittel (520, 600), dazu geeignet, das besagte wasserabdichtende Element (60; 460) gegen das besagte erste, röhrenförmigen Element (301) zu drücken,
**dadurch gekennzeichnet, dass** die besagten zweiten Druckmittel ein Hilfselement (520) umfassen, das zwischen dem besagten Verbindungselement (402) und dem besagten ersten röhrenförmigen Element (301) eingesetzt ist; wobei die besagten zweiten Druckmittel des Weiteren verstellbare Druckmittel (600) umfassen; wobei das besagte Hilfs-Druckelement (520) mit den besagten, verstellbaren Druckmitteln (600) zusammenarbeitet, um die Druckwirkung auf das besagte Abdichtelement (460) zu gewährleisten.

2. Vorrichtung gemäß Patentanspruch 1, **dadurch gekennzeichnet, dass** das besagte Hilfs-Druckelement (520) die Form eines ringförmigen Kegelstumpfs hat und eine erste seitliche, ringförmige Fläche (521) aufweist, dazu geeignet, mit den besagten, verstellbaren Druckmitteln (600) zusammenzuarbeiten, und eine zweite seitliche, ringförmige Fläche (522) aufweist, die der ersten entgegengesetzt und dazu geeignet ist, in Kontakt mit der Dichtung (460) angeordnet zu werden.

3. Vorrichtung gemäß eines jeden der vorstehenden Patentansprüche, **dadurch gekennzeichnet, dass** die besagten, verstellbaren Druckmittel (600) eine Vielzahl hervorstehender Aufnahmen (703) des besagten Verbindungselements (402) umfassen, welche durchgehende Gewindelöcher (704) aufweisen, von denen jedes geeignet ist, ein entsprechendes, darin eingeschraubtes Verstellelement (705) aufzunehmen.

4. Vorrichtung (400) gemäß eines jeden der vorstehenden Patentansprüche, **dadurch gekennzeichnet, dass** die besagten, ersten Druckmittel durch die besagten Befestigungsmittel (420) betätigt werden.

5. Vorrichtung (400) gemäß eines jeden der vorstehenden Patentansprüche, **dadurch gekennzeichnet, dass** die besagten, ersten Druckmittel wechselseitige Kontaktflächen (454a; 454b) des besagten Verbindungselements (402) und des besagten Greifelements (410) umfassen.

6. Vorrichtung (400) gemäß Patentanspruch 5, **dadurch gekennzeichnet, dass** die besagten, wechselseitigen Kontaktflächen (454a; 454b) bezüglich der Längsachse (X3) des besagten Verbindungselements (402) geneigt sind.

7. Vorrichtung (400) gemäß eines jeden der vorstehenden Patentansprüche, **dadurch gekennzeichnet, dass** das besagte Greifelement (410) radial verformbar ist.

8. Vorrichtung (400) gemäß eines jeden der vorstehenden Patentansprüche, **dadurch gekennzeichnet, dass** das besagte Greifelement (410) wenigstens zwei Elemente (411, 412) umfasst, die geeignet sind, nebeneinander angeordnet zu werden, um die besagte Außenfläche (S) des besagten zweiten, röhrenförmigen Elements (321) wenigstens teilweise zu bedecken.

9. Vorrichtung (400) gemäß eines jeden der vorstehenden Patentansprüche, **dadurch gekennzeichnet, dass** sie eine mechanisch sperrende, flexible Kupplung ist.

## Revendications

1. Dispositif de connexion (400) pour unir un premier élément tubulaire (301) à un deuxième élément tubulaire (321), comprenant au moins un élément de connexion (402) doté de moyens de fixation (420) pour la connexion audit premier élément tubulaire (301), ledit dispositif comprenant en outre un élément de prise (410) qui est interposé entre ledit élément de connexion (402) et ledit premier élément tubulaire (301) et est doté d'éléments de prise (433) indiqués pour être mis en contact avec au moins une portion de la surface extérieure (S) dudit deuxième élément tubulaire (321), ledit dispositif de connexion (400) comprenant de premiers moyens de poussée indiqués pour forcer lesdits moyens de prise (433) dudit élément de prise (410) contre ladite surface extérieure (S) de façon à rendre ledit élément de prise (410) solidaire dudit deuxième élément tubulaire (321) et à garantir une résistance mécanique ; un élément d'étanchéité (460) interposé entre ledit élément de connexion (402) et ledit premier élément tubulaire (301) ; de deuxièmes moyens de poussée (520, 600) indiqués pour pousser ledit élément d'étanchéité (60 ; 460) contre ledit premier élément tubulaire (301) ; **caractérisé en ce que** lesdits deuxièmes moyens de poussée comprennent un élément auxiliaire (520) qui est interposé entre ledit élément de connexion (402) et ledit premier élément tubulaire (301), lesdits deuxièmes moyens de poussée comprennent également des moyens de poussée réglables (600) ; ledit élément de poussée auxiliaire (520) coopérant avec lesdits moyens de poussée réglables (600) de façon à garantir l'action de poussée sur ledit élément d'étanchéité (460).

2. Dispositif selon la revendication 1, **caractérisé en ce que** ledit élément de poussée auxiliaire (520) présente une forme tronconique annulaire et présente une première face annulaire latérale (521) indiquée pour coopérer avec lesdits moyens de poussée réglables (600) et une deuxième face annulaire latérale (522), opposée à la première face, indiquée pour être mise en contact avec l'élément d'étanchéité (460).

3. Dispositif selon l'une quelconque des revendications précédentes, **caractérisé en ce que** lesdits moyens de poussée réglables (600) comprennent une pluralité de sièges saillants (703) dudit élément de connexion (402) doté de trous passants filetés (704), chacun indiqué pour accueillir un élément de réglage correspondant (705) qui est vissé dans celui-ci.

4. Dispositif (400) selon l'une quelconque des revendications précédentes, **caractérisé en ce que** lesdits premiers moyens de poussée sont actionnés par lesdits moyens de fixation (420).

5. Dispositif (400) selon l'une quelconque des revendications précédentes, **caractérisé en ce que** lesdits premiers moyens de poussée comprennent des surfaces de contact mutuel (454a ; 454b) dudit élément de connexion (402) et ledit élément de prise (410).

6. Dispositif (400) selon la revendication 5, **caractérisé en ce que** lesdites surfaces de contact mutuel (454a ; 454b) sont inclinées par rapport à l'axe de développement (X3) dudit élément de connexion (402).

7. Dispositif (400) selon l'une quelconque des revendications précédentes, **caractérisé en ce que** ledit élément de prise (410) est radialement déformable.

8. Dispositif (400) selon l'une quelconque des revendications précédentes, **caractérisé en ce que** ledit élément de prise (410) comprend au moins deux éléments (411, 412) indiqués pour être disposés l'un à côté de l'autre de façon à occuper au moins partiellement ladite surface extérieure (S) dudit deuxième élément tubulaire (321).

9. Dispositif (400) selon l'une quelconque des revendications précédentes, **caractérisé en ce qu'**il est un accouplement élastique à serrage mécanique.
